# EUROPÄISCHE PATENTSCHRIFT

(11) **EP 1 212 198 B1**
(45) Veröffentlichungstag und Bekanntmachung des Hinweises auf die Patenterteilung: **14.05.2003**
(21) Anmeldenummer: 00954624.3
(22) Anmeldetag: 11.08.2000
(51) Int. Cl.: B41J 2/465, G02B 26/08, G06K 15/12, B41J 2/52

(54) **VORRICHTUNG UND VERFAHREN ZUR KOMPENSATION VON INHOMOGENITÄTEN BEI ABBILDUNGSSYSTEMEN**
DEVICE AND METHOD FOR COMPENSATING NON-UNIFORMITIES IN IMAGING SYSTEMS
DISPOSITIF ET PROCEDE DE COMPENSATION DE NON HOMOGENEITES DANS DES SYSTEMES DE REPRESENTATION

(30) Priorität: 17.09.1999 DE 19944760
(43) Veröffentlichungstag der Anmeldung: 12.06.2002
(73) Patentinhaber: Basys Print GmbH Systeme für die Druckindustrie, 19258 Boizenburg (DE); Toyo Ink. MFG. Co. Ltd., Tokyo 173-8666 (JP)
(72) Erfinder: EGGERS, Stefan, 21465 Wentorf (DE); ANDREAE, Claas, 21382 Brietlingen (DE)
(74) Vertreter: Vonnemann, Gerhard, Dr.-Ing.
(86) Internationale Anmeldenummer: EP0007842
(87) Internationale Veröffentlichungsnummer: WO01021413

(56) Entgegenhaltungen:
- WO-A-99/36268
- US-A- 5 049 901
- US-A- 5 771 060
- US-A- 5 844 588

## Beschreibung

Die Erfindung betrifft eine Belichtungs- und Modulationsvorrichtung zur Modulation der Belichtungsintensität beim Integrating-Digital-Screen-Imaging Verfahren (IDSI) mit einer Lichtquelle, mit einem Lichtmodulator, der eine Mehrzahl von Reihen aus lichtmodulierenden Zellen aufweist, mit einer Einrichtung zum Abbilden auf dem Lichtmodulator, mit einer Einrichtung zum Abbilden des Lichtmodulators auf lichtempfindliches Material, mit einer Einrichtung zur Erzeugung einer relativen Bewegung zwischen dem Lichtmodulator und dem lichtempfindlichen Material, wobei die Richtung der Bewegung im wesentlichen senkrecht zu der Richtung der Reihen aus lichtmodulierenden Zellen verläuft, sowie mit einer Einrichtung zum Scrollen eines Datenmusters durch die verschiedenen Spalten des Lichtmodulators, mit einer Rate, durch die die Abbildung irgend eines Datenmusters im wesentlichen stationär relativ zu den lichtempfindlichen Material während der Bewegung gehalten wird. Weiterhin betrifft die Erfindung ein Verfahren zur Belichtung und zur Modulation der Belichtungsintensität beim Integrating-Digital-Screen-Imaging Verfahren (IDSI), bei dem Licht aus einer Lichtquelle, auf einem Lichtmodulator, der eine Mehrzahl von Reihen aus lichtmodulierenden Zellen aufweist, abgebildet wird und von diesem moduliert wird, wonach der Lichtmodulator auf lichtempfindliches Material, welches sich in einer Relativbewegung zum Lichtmodulator befindet, abgebildet wird, wobei die Richtung der Bewegung im wesentlichen senkrecht zu der Richtung der Reihen aus lichtmodulierenden Zellen verläuft und daß die auf dem lichtempfindlichen Material abzubildenden Daten durch die Spalten des Lichtmodulators gescrollt werden, mit einer Rate, durch die die Abbildung irgend eines Datenmusters im wesentlichen stationär relativ zu den lichtempfindlichen Material während der Bewegung gehalten wird.

Die oben beschriebene Vorrichtung ist aus der DE 41 21 509 A1 bekannt. Die in dieser Schrift beschriebene Erfindung ist insbesondere von Bedeutung für Prozesse, bei denen große Mengen von moduliertem Licht im blauen und ultravioletten Bereich benötigt werden, wie beispielsweise bei der Belichtung von Druckplatten, der Belichtung von gedruckten Schaltungen und bei der Stereolithographie. Prinzip der Erfindung ist, daß das lichtempfindliche Material kontinuierlich bewegt wird, während der Bildinhalt mit gleicher Geschwindikeit in entgegengesetzter Richtung durch den Lichtmodulator gescrollt wird. Der Bildinhalt bleibt so ortsfest auf dem zu belichtenden Material. Die Belichtung baut sich durch Integration aller kurzen Einzelbelichtungen der Zellen einer Reihe auf. So werden Streifen mit einer Anzahl der Reihen des Lichtmodulators entsprechenden Breite belichtet. Durch ein Aneinandersetzen mehrerer Streifen wird eine größere Fläche belichtet.

Problematisch bei der beschriebenen Vorrichtung ist, daß Inhomogenitäten im Lichtmodulator, z.B. durch Ausleuchtungsunterschiede oder lokal unterschiedliche Abbildungsleistung bei einheitlich angesteuerten Zellen unterschiedliche Belichtungsergebnisse innerhalb eines Teilbildes auf den zu belichtenden Material erzeugen. Die Unterschiede von auf dem lichtempfindlichen Material benachbarten Pixeln sind in der Regel vom menschlichen Auge nicht zu detektieren, da der Mensch hauptsächlich Änderungen erkennt. Sehr problematisch ist die Kompensation vor allem in Bereichen, wo auf dem lichtempfindlichen Material nicht benachbarte Pixel nebeneinander projiziert werden. Beim IDSI Verfahren trifft das auf die äußeren Reihen zu, denn dort treffen die belichteten Streifen aufeinander.

Im Gegensatz zum IDSI Verfahren werden beim Digital-Screen-Imaging (DSI) Verfahren einzelne Bildabschnitte belichtet. Das Gesamtbild setzt sich dann aus einer Vielzahl von Einzelbildern zusammen. Versuche, daß beim DSI Verfahren angewandte System zur Kompensation von Inhomogenitäten, die Energie jeder Zelle getrennt einzustellen, auf das IDSI System zu übertragen, schlugen fehl. Zum einen übersteigen die nötigen Übertragungsraten bei maximal ca. 50 kHz Scrollfrequenz bei einer nötigen Abstufungstiefe von minimal 6 Bit, besser 8 Bit bei einer Lichtmodulatorbreite von 1024 Zellen bei weitem die Fähigkeiten einer Ansteuerelektronik. Zum anderen gibt es keinen Lichtmodulator, der schnell genug arbeiten würde, um bei einem Takt von 50 kHz eine Abstufung von 6 bis 8 Bit zu gewährleisten.

Aufgabe der Erfindung ist es daher eine Vorrichtung und ein Verfahren vorzustellen, mit dem die Belichtungsqualität mit einfachen Mitteln optimiert werden kann.

Die der Erfindung zugrunde liegende Aufgabe wird dadurch gelöst, daß die Vorrichtung mindestens eine Einrichtung zur Variation der Anzahl der für die Belichtung des lichtempfindlichen Materials genutzten Zellen des Lichtmodulatörs aufweist bzw. daß beim erfindungsgemäßen Verfahren die Anzahl der für die Belichtung des lichtempfindlichen Materials genutzten Zellen des Lichtmodulators variiert werden kann.

Die Bildinformation wird nicht die gesamte Strecke durch den Lichtmodulator gescrollt. Der Scrollvorgang wird vielmehr nach einer bestimmten, einstellbaren Zahl von Zellen unterbunden. Die Belichtungszeit kann damit für jeden Pixel der Reihe auf dem lichtempfindlichen, zu belichtenden Material variiert werden. Die integrierte Energie einer Reihe ist genau definierbar. Die Inhomogenitäten können so mit einer einfachen Steuerung ausgeglichen werden.

Die erfindungsgemäße Vorrichtung hat den großen Vorteil im Gegensatz zu DSI Vorrichtungen, daß die Anzahl der zu kalibrierenden Zellen von mehreren hunderttausend Zellen auf ca. tausend Reihen reduziert werden kann.

Gemäß einer weiteren vorteilhaften Ausgestaltungsform der Erfindung besteht der Lichtmodulator aus einer Mikrospiegelanordnung (Digital Mirror Device - DMD). Die einzelnen Spiegel der Mikrospiegelanordnung lassen sich ohne größere Probleme gut ansteuern. Diejenigen Spiegel die durch die erfindungsgemäße Vorrichtung nicht für die Belichtung des lichtempfindlichen Materials genutzt werden, lenken den auf sie abgebildeten Lichtstrahl vom lichtempfindlichen Material weg.

Der Lichtmodulator besteht gemäß einer vorteilhaften Ausführungsform der Erfindung aus 1024 * 758 Zellen. Hierdurch erhält man die Möglichkeit, daß die Abstufung der Belichtungsenergie sehr fein erfolgen kann. Die Einstellung kann in 758 Einheiten bzw. in 1024 Einheiten vorgenommen werden, je nach Scrollrichtung des Datenmusters durch den Lichtmodulator.

Gemäß einer weiteren sehr vorteilhaften Ausgestaltungsformen der Erfindung ist vorgesehen, daß der Lichtmodulator aus einer Flüssigkristallanordnung, aus magnetooptischen Zellen, oder aus ferro-elektrischen Zellen besteht. Prinzipiell sind auch alle weiteren Variationen von Lichtmodulatoren einsetzbar. Es ergibt sich der große Vorteil, daß jede schon bestehende IDSI Vorrichtung mit einer Einrichtung zur Variation der Anzahl der für die Belichtung des lichtempfindlichen Materials genutzten Zellen des Lichtmodulators umgerüstet werden kann.

Die Verfahrensaufgabe wird, wie schon erwähnt, sehr vorteilhaft dadurch gelöst, daß die Anzahl der für die Belichtung des lichtempfindlichen Materials genutzten Zellen des Lichtmodulators variiert wird.

Die Belichtungszeit kann für jeden Pixel auf dem lichtempfindlichen, zu belichtenden Material variiert werden, da die Bildinformation nicht mehr über die gesamte Strecke des Lichtmodulators gescrollt wird. Die integrierte Energie einer Reihe ist genau definierbar. Die Inhomogenitäten können so mit einer einfachen Steuerung ausgeglichen werden.

Gemäß einer besonders vorteilhaften Ausgestaltungsform des erfindungsgemäßen Verfahrens müssen die Bilddaten nicht anfänglich in die erste Spalte des Lichtmodulators übertragen werden. Die Daten können beispielsweise erst auf eine weiter hinten liegende Spalte übertragen werden. Die davor liegenden Spalten werden dann nicht zur Belichtung genutzt. Die aufgebrachte Belichtungsenergie sinkt somit.

Anhand der Zeichnungen, die ein Ausgestaltungsbeispiel der Erfindung darstellen, wird diese näher beschrieben.

Es zeigen:
- Fig. 1:: eine schematische Darstellung der vollständigen Belichtungs- und Modulationsvorrichtung,
- Fig. 2-5:: eine schematische Darstellung des Datenmusterübertragungsprinzips und
- Fig. 6:: eine schematische Darstellung des Lichtmodulators mit für die Belichtung genutzten und ungenutzten Zellen.

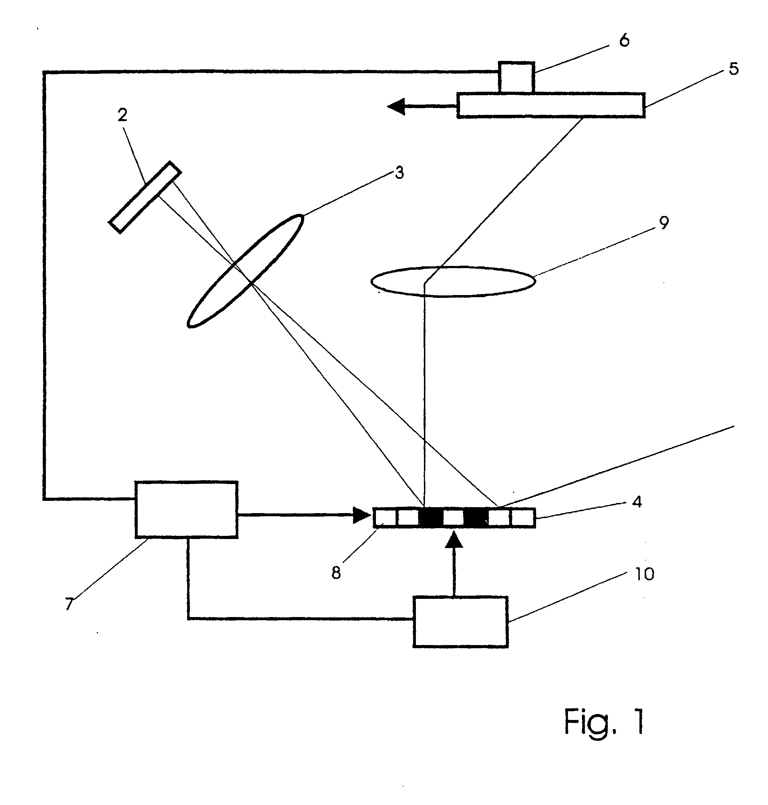

In Figur 1 ist schematisch die Belichtungs- und Modulationsvorrichtung 1 gezeigt. Eine Lichtquelle 2 wird unter Verwendung einer ersten Linse 3 auf einem Lichtmodulator 4 abgebildet. Die Position des lichtempfindlichen Materials 5 relativ zum Lichtmodulator 4 wird durch einen Positionsgeber 6 verändert. Die Relativbewegung erfolgt in Richtung der Zellen einer Reihe des Lichtmodulators. Datenmuster werden unter Verwendung einer Treiberschaltung 7 in die erste Spalte mit Zellen 8 des Lichtmodulators übertragen. Wichtig hierbei ist die Synchronisation der Datenmusterübertragung und der Bewegung des lichtempfindlichen Materials 5. Das in die erste Spalte übertragene Datenmuster wird synchron zur Relativbewegung in die nächste Spalte verschoben, so daß das auf das lichtempfindliche Material 5 übertragene Datenmuster ortsfest auf diesem verbleibt. Der Lichtmodulator 4 besteht aus mehreren Spalten von Zellen 8. Das auf den Lichtmodulator 4 übertragene Datenmuster besteht aus Kombinationen von aktivierten und inaktivierten Zellen 8. Werden die Zellen 8 aktiviert, wird das auf sie fallende Licht über eine zweite Linse 9 auf das lichtempfindliche Material 5 übertragen. Das Licht, das auf inaktive Zellen trifft, wird vom lichtempfindlichen Material 5 weggelenkt. Besonders positiv bei der dargestellten Ausführungsform ist, daß eine Einrichtung 10 vorgesehen ist, die die Anzahl der Zellen, die für eine Belichtung zur Verfügung stehen variiert. Das bedeutet, daß nicht alle Zellen 8 einer Reihe für die Datenmusterübertragung ansteuerbar sind. Da die Belichtungsintensität des zu belichtenden Materials von der Dauer der Belichtung, also von den zur Verfügung stehenden Zellen 8, abhängig ist, hat man über diese Einrichtung 10, die Möglichkeit Inhomogenitäten des Bildes auszugleichen.

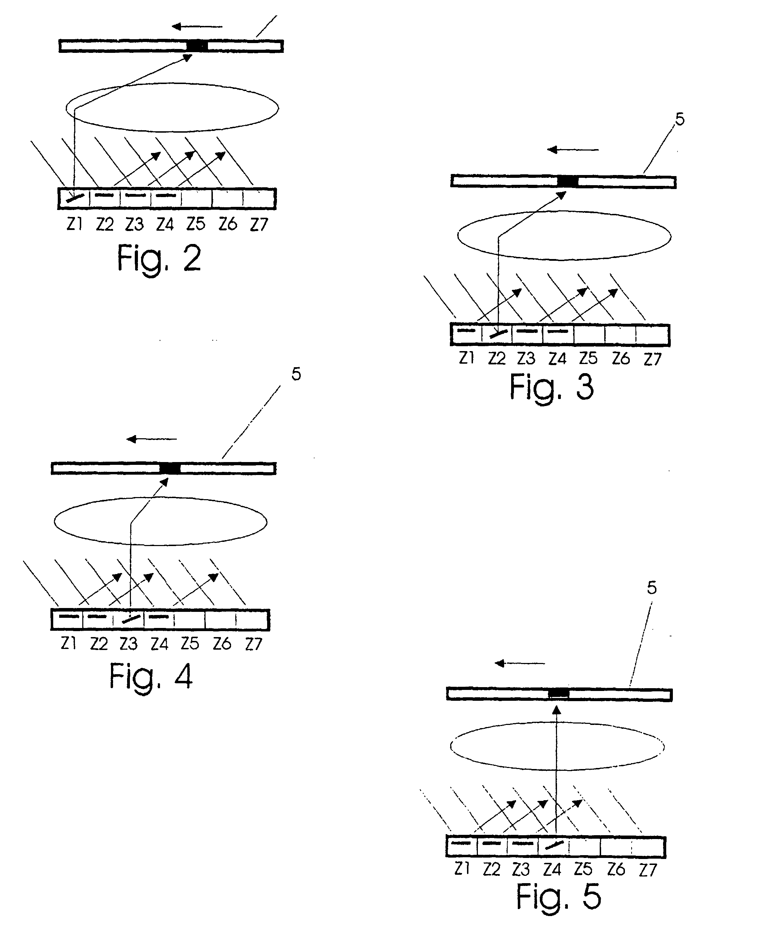

In den Figuren 2 bis 5 ist dargestellt, wie ein Datenmuster von Zelle zu Zelle in einer Reihe verschoben wird und dabei ortsfest auf dem lichtempfindlichen Material 5 bleibt. In Figur 2 erreicht ein Signal die erste Zelle Z1. Dasselbe Datenmuster wird in Figur 3 auf die nächste Spalte bzw. hier Zelle Z2 übertragen, während ein neues Muster in die erste Spalte bzw. hier Zelle Z1 übertragen wird. In Figur 5 ist das zuerst eingelesene Datenmuster an Zelle 4 Z4 angelangt. Die Zellen Z5 bis Z6 sind durch die Einrichtung 10 nicht für die Übertragung des Datenmusters ansteuerbar. Sie stehen nicht zur Belichtung des lichtempfindlichen Materials zur Verfügung. Wird eine höhere Belichtungsintensität benötigt, so werden diese aktiviert und das Datenmuster wird weiter übertragen.

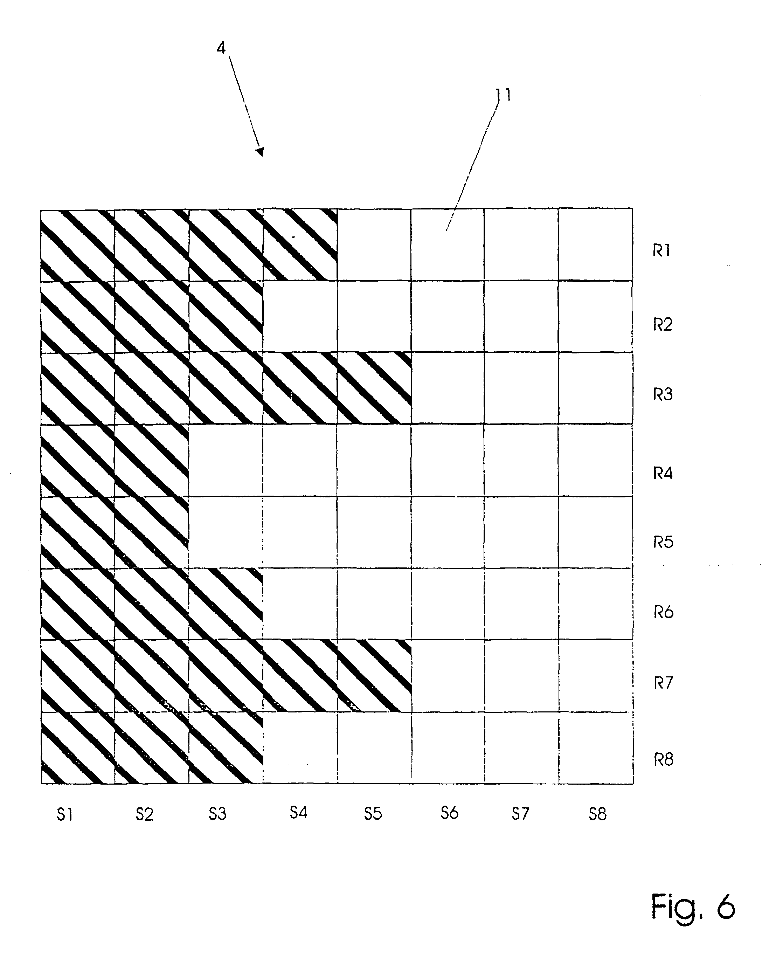

Figur 6 zeigt einen Lichtmodulator 4, der in Reihen R1 bis R9 und in Spalten S1 bis S8 untergliedert ist. Die gestrichelt dargestellten Zellen 11 stehen für die Belichtung zur Verfügung. Datenmuster werden in die Spalte S8 eingelesen und in Spalte S7 übertragen. In den verschiedenen Reihen R1 bis R8 ist eine unterschiedliche Anzahl von Zellen 11 ansteuerbar. Da die Belichtungsintensität über die Zellen einer Reihe integriert wird, erhält man so unterschiedliche Belichtungsintensitäten für einzelne Pixel auf dem lichtempfindlichen Medium 5.

## Patentansprüche

1. Belichtungs- und Modulationsvorrichtung (1) zur Modulation der Belichtungsintensität beim Integrating-Digital-Screen-Imaging Verfahren (IDSI) mit einer Lichtquelle (2), mit einem Lichtmodulator (4), der eine Mehrzahl von Reihen aus lichtmodulierenden Zellen (8) aufweist, mit einer Einrichtung (3) zum Abbilden auf dem Lichtmodulator (4), mit einer Einrichtung (9) zum Abbilden des Lichtmodulators (4) auf lichtempfindliches Material (5), mit einer Einrichtung zur Erzeugung einer relativen Bewegung zwischen dem Lichtmodulator (4) und dem lichtempfindlichen Material (5), wobei die Richtung der Bewegung im wesentlichen senkrecht zu der Richtung der Reihen aus lichtmodulierenden Zellen verläuft, sowie mit einer Einrichtung zum Scrollen eines Datenmusters durch die verschiedenen Spalten des Lichtmodulators (4), mit einer Rate, durch die die Abbildung irgend eines Datenmusters im wesentlichen stationär relativ zu den lichtempfindlichen Material (5) während der Bewegung gehalten wird, **dadurch gekennzeichnet, daß** die Vorrichtung mindestens eine Einrichtung (10) zum Unterbinden des Scrollvorgangs nach einer bestimmten einstellbaren Anzahl der für die Belichtung des lichtempfindlichen Materials (5) genutzten Zellen (11) des Lichtmodulators (4) aufweist.

2. Vorrichtung nach Anspruch 1, **dadurch gekennzeichnet, daß** der Lichtmodulator (4) aus einer Mikrospiegelanordnung (Digital Mirror Device - DMD)besteht.

3. Vorrichtung nach Anspruch 3, **dadurch gekennzeichnet, daß** der Lichtmodulator (4) aus 1024 * 758 Zellen (8) besteht.

4. Vorrichtung nach einem der Ansprüche 1 bis 3, **dadurch gekennzeichnet, daß** der Lichtmodulator (4) aus einer Flüssigkristallanordnung besteht.

5. Vorrichtung nach einem der Ansprüche 1 bis 4, **dadurch gekennzeichnet, daß** der Lichtmodulator (4) aus magnetooptischen Zellen besteht.

6. Vorrichtung nach einem der Ansprüche 1 bis 5, **dadurch gekennzeichnet, daß** der Lichtmodulator (4) aus ferro-elektrischen Zellen besteht.

7. Verfahren zur Belichtung und zur Modulation der Belichtungsintensität beim Integrating-Digital-Screen-Imaging Verfahren (IDSI), bei dem Licht aus einer Lichtquelle (2), auf einem Lichtmodulator (4), der eine Mehrzahl von Reihen aus lichtmodulierenden Zellen (8) aufweist, abgebildet wird und von diesem moduliert wird, wonach der Lichtmodulator (4) auf lichtempfindliches Material (5), welches sich in einer Relativbewegung zum Lichtmodulator (4) befindet, abgebildet wird, wobei die Richtung der Bewegung im wesentlichen senkrecht zu der Richtung der Reihen aus lichtmodulierenden Zellen (8) verläuft und daß die auf dem lichtempfindlichen Material (5) abzubildenden Daten durch die Spalten des Lichtmodulators (4) gescrollt werden, mit einer Rate, durch die die Abbildung irgend eines Datenmusters im wesentlichen stationär relativ zu den lichtempfindlichen Material (5) während der Bewegung gehalten wird, **dadurch gekennzeichnet, daß** der Scrollvorgang, je nach der für den jeweiligen Pixel auf dem zu belichtenden Material vorgesehenen Belichtungszeit, nach einer bestimmten einstellbaren Anzahl der für die Belichtung des lichtempfindlichen Materials (5) genutzten Zellen (11) des Lichtmodulators (4) unterbunden wird.

8. Verfahren nach Anspruch 7, **dadurch gekennzeichnet, daß** die abzubildenden Daten in eine beliebige Spalte verschoben werden können, um von dort aus zu den nächsten folgenden Spalten übertragen zu werden.

## Claims

1. An exposure and modulation device (1) for modulating the exposure intensity with the integrating-digital-screen-imaging method (IDSI) with a light source (2), with a light modulator (4) which comprises a plurality of rows of light-modulating cells (8), with a means (3) for imaging on the light modulator (4), with a means (9) for imaging the light modulator (4) onto light-sensitive material (5), with a means for producing a relative movement between the light modulator (4) and the light-sensitive material (5), wherein the direction of the movement runs essentially perpendicular to the direction of the rows of light-modulating cells, as well as with a means for scrolling a data pattern through the various columns of the light modulator (4) at a rate by way of which the image of any data pattern is held essentially stationary relative to the light-sensitive material (5) during movement, **characterised in that** the device comprises at least one means (10) for stopping the scrolling procedure after a certain settable number of cells (11) of the light modulator (4) which are used for the exposure of the light-sensitive material (5).

2. A device according to claim 1, **characterised in that** the light modulator (4) consists of a micro-mirror arrangement (digital mirror device - DMD).

3. A device according to claim 3, **characterised in that** the light modulator (4) consists of 1024 x 758 cells (8).

4. A device according to one of the claims 1 to 3, **characterised in that** the light modulator (4) consists of a liquid crystal arrangement.

5. A device according to one of the claims 1 to 4, **characterised in that** the light modulator (4) consists of magneto-optic cells.

6. A device according to one of the claims 1 to 5, **characterised in that** the light modulator (4) consists of ferro-electric cells.

7. A method for exposure and for modulation of the exposure intensity with the integrating digital screen imaging method (IDSI) with which light from a light source (2) is imaged on a light modulator (4) which comprises a plurality of rows of light modulating cells (8), and is modulated by this, whereupon the light modulator (4) is imaged onto light-sensitive material (5) which is located in a relative movement to the light modulator (4), wherein the direction of the movement runs essentially perpendicular to the direction of the rows of light-modulating cells (8) and that the data to be imaged on the light-sensitive material (5) is scrolled through the columns of the light modulator (4) at a rate by way of which the image of any data pattern is held essentially stationary relative to the light-sensitive material (5) during movement, **characterised in that** the scrolling procedure is stopped, depending on the planned exposure time for each pixel on the material to be exposed, after a certain settable number of cells (11) of the light modulator (4) which are used for the exposure of the light-sensitive material (5).

8. A method according to claim 7, **characterised in that** the data to be imaged may be displaced into any column in order from here to be transmitted to the next following columns.

## Revendications

1. Dispositif d'éclairage et de modulation (1) pour moduler l'intensité d'éclairage selon un procédé d'integration numérique de trames d'imagerie (IDSI) comportant une source lumineuse (2), un modulateur de lumière (4) à plusieurs rangées de cellules de modulation de lumière (8), une installation (3) pour former l'image sur le modulateur de lumière (4), une installation (9) pour former une image du modulateur de lumière (4) sur la matière photosensible (5), une installation pour générer un mouvement relatif entre le modulateur de lumière (4) et la matière photosensible (5), la direction du mouvement étant essentiellement perpendiculaire à la direction des rangées de cellules à modulation de lumière ainsi qu'une installation pour dérouler un modèle de données sur les différentes colonnes du modulateur de lumière (4) à une vitesse qui maintient fixe par rapport à la matière photosensible (5) l'image d'un quelconque modèle de données pendant le mouvement,
**charactérisé en ce que** le dispositif comporte au moins une installation (10) pour arrêter l'opération de déroulement selon un nombre défini ajustable de cellules (11) du modulateur de lumière (4) utilisées pour l'éclairage de la matière photosensible (5).

2. Dispositif selon la revendication 1, **charactérisé en ce que** le modulateur de lumière (4) se compose d'un dispositif à micro-miroirs (dispositif à miroir numérique DMD).

3. Dispositif selon la revendication 2, **charactérisé en ce que** le modulateur de lumière (4) se compose de 1024 fois 758 cellules (8).

4. Dispositif selon l'une quelconque des revendications 1 à 3, **charactérisé en ce que** le modulateur de lumière (4) est formé par un dispositif à cristaux liquides.

5. Dispositif selon l'une quelconque des revendications 1 à 4, **charactérisé en ce que** le modulateur de lumière (4) est formé de cellules magnéto-optiques.

6. Dispositif selon l'une quelconque des revendications 1 à 5, **charactérisé en ce que** le modulateur de lumière (4) est formé de cellules ferroélectriques.

7. Procédé d'éclairage et de modulation de l'intensité lumineuse selon un procédé d'intégration numérique de trames d'imagerie (IDSI) selon lequel de la lumière d'une source lumineuse (2) est formée sur un modulateur de lumière (4) ayant plusieurs rangées de cellules de molulation de lumière (8), pour être modulées par ce modulateur, l'image du modulateur de lumière (4) étant formée sur la matière photosensible (5) en mouvement relatif par rapport au modulateur de lumière (4), la direction du mouvement étant essentiellement perpendiculaire à la direction des rangées de cellules (8) de modulation de lumière et les données à copier sur la matière photosensible (5) sont déroulées dans les colonnes du modulateur de lumière (4) ave une vitesse qui maintient essentiellement fixe l'image d'un quelconque modèle de données par rapport à la matière photosensible (5) pendant le mouvement, **charactérisé en ce que** la procédure de déroulement est arretée selon la temp d'éxposition prévu pour chaque pixel sur la matière photosensible (5) selon un nombre défini ajustable de celllules (1) du modulateur de lumière (4), utilisé pour éclairer la matière photosensible (5) est variable.

8. Procédé selon la revendication 7, **charactérisé en ce que** les données à copier peuvent être décalées dans une colonne quelconque pour être transmises de là vers les colonnes suivantes.
